# FASCICULE DE BREVET EUROPEEN

(11) **EP 1 778 451 B1**
(45) Date de publication et mention de la délivrance du brevet: **12.10.2011**
(21) Numéro de dépôt: 05798601.0
(22) Date de dépôt: 18.08.2005
(51) Int. Cl.: B29C 45/16

(54) **MODULE POUR MOULAGE PAR INJECTION D'UNE PIECE EN MATIERE PLASTIQUE ET PROCEDE DE MOULAGE**
FORM ZUM SPRITZGIESSEN EINES KUNSTSTOFFTEILS UND GUSSVERFAHREN
MOULD FOR THE INJECTION MOULDING OF A PLASTIC PIECE AND MOULDING METHOD

(30) Priorité: 18.08.2004 FR 0408963
(43) Date de publication de la demande: 02.05.2007
(73) Titulaire: Faurecia Interieur Industrie, 92000 Nanterre (FR)
(72) Inventeur: ROY-MARTINACHE, Annabelle, F-95300 CERGY PONTOISE (FR); DI RIENZO, Alain, F-95270 ASNIERES SUR OISE (FR)
(74) Mandataire: Blot, Philippe Robert Emile
(86) Numéro de dépôt international: PCT/FR2005/002112
(87) Numéro de publication internationale: WO 2006/021697

(56) Documents cités:
- GB-A- 1 370 075
- US-A1- 2002 167 816
- US-A1- 2003 205 915
- PATENT ABSTRACTS OF JAPAN vol. 010, no. 246 (M-510), 23 août 1986 (1986-08-23) & JP 61 076333 A (NISSEI PLASTICS IND CO), 18 avril 1986 (1986-04-18)
- PATENT ABSTRACTS OF JAPAN vol. 1995, no. 10, 30 novembre 1995 (1995-11-30) -& JP 07 186186 A (KOITO MFG CO LTD), 25 juillet 1995 (1995-07-25)

## Description

La présente invention est relative au moulage par injection d'une pièce en matière plastique comportant au moins deux parties adjacentes constituées de deux matières plastiques de natures et/ou de couleurs différentes.

Certaines pièces en matière plastique, et en particulier des pièces de parement intérieur de véhicule automobile, comportent plusieurs parties adjacentes de couleurs ou d'aspects différents. Ces pièces sont obtenues par exemple en moulant par injection des pièces dans un moule dans lequel on a placé au préalable des peaux d'aspect de couleurs ou de textures différentes. Un tel procédé présente l'inconvénient de nécessiter de nombreuses opérations et notamment la préparation de peaux d'aspect correspondant aux parties de natures et/ou de couleurs différentes.

Pour réaliser de telles pièces, on peut utiliser également des moules dont la cavité de moulage peut être divisée en plusieurs parties à l'aide d'une paroi mobile ou d'une lame mobile, que l'on peut escamoter. Dans de tels moules, on dispose d'abord la paroi mobile dans une position d'extension telle qu'elle divise la cavité de moulage en deux parties, et on injecte une première matière plastique dans une première partie de la cavité de moulage. Après solidification de la matière plastique injectée, on déplace la paroi mobile pour l'amener dans une position de retrait, qui met en communication la deuxième partie de la cavité de moulage avec la partie qui a déjà été remplie de matière plastique par injection. On injecte alors une deuxième matière plastique dans la deuxième partie de la cavité de moulage. Cette deuxième matière plastique vient au contact de la matière plastique déjà solidifiée et adhère à cette première matière plastique par soudage. De tels procédés sont connus par exemple de US 2003/0205915 ou de US 2002/0167816.

Cette technique présente un inconvénient car elle n'est adaptée qu'à des pièces dont les parois sont planes. En effet, pour assurer une bonne étanchéité des deux parties de la cavité de moulage délimité par la paroi mobile, il est nécessaire d'utiliser une paroi mobile dont une des arêtes vient en contact étroit avec une surface de la cavité de moulage en position d'extension et qui, en position de retrait, s'adapte parfaitement à la deuxième surface de la cavité de moulage. Cette disposition nécessite en particulier que la cavité de moulage soit plane au moins dans la zone de contact avec l'arête de la paroi mobile. Cette contrainte, constitue une limitation et un inconvénient, puisqu'il est souvent souhaitable de réaliser des pièces en matière plastique comportant plusieurs parties adjacentes de natures et/ou de couleurs différentes, ayant des surfaces non planes.

Le but de la présente invention est de remédier à cet inconvénient en proposant un moyen pour mouler par injection une pièce en matière plastique comportant au moins deux parties adjacentes constituées de deux matières plastiques de natures et/ou de couleurs différentes afin de réaliser une pièce ayant des parois non planes.

A cet effet, l'invention a pour objet un moule pour moulage par injection d'une pièce en matière plastique comportant au moins deux parties adjacentes constituées de deux matières plastiques compatibles et assemblées entre elles par soudage ou par collage, de natures et/ou de couleurs différentes, le moule comprenant une cavité de moulage délimitée par au moins deux parois non planes, et au moins une paroi escamotable mobile entre une position d'extension et une position de retrait permettant de diviser la cavité de moulage en au moins deux compartiments pouvant être alimentés séparément en matière plastique. En position d'extension la paroi escamotable a une arête non rectiligne coopérant sans jeu avec une paroi de la cavité de moulage, et la paroi escamotable comprend une pluralité de panneaux jointifs dans au moins la position d'extension ou la position de retrait, lesdits panneaux étant mobiles les uns par rapport aux autres de façon à pouvoir modifier la forme de l'arête non rectiligne de la paroi escamotable pour l'adapter à la forme d'une deuxième paroi de la cavité dans la position de retrait.

De préférence, la paroi escamotable comprend au moins trois portions non colinéaires et la paroi escamotable comporte au moins un panneau pouvant être déplacé entre la position d'extension et la position de retrait par deux mouvements successifs selon deux directions différentes.

L'arête de la paroi escamotable comporte par exemple une portion centrale en forme de segment prolongée à ses deux extrémités par des arcs terminaux non colinéaires au segment central, et en position d'extension, la paroi escamotable comporte deux panneaux latéraux séparés par un panneau central escamotable, les panneaux latéraux étant mobiles selon deux directions perpendiculaires de façon à pouvoir être déplacés dans une position de retrait par deux mouvements successifs selon deux directions différentes.

Le moule peut comporter une pluralité de parois escamotables.

L'invention concerne également un procédé pour fabriquer une pièce en matière plastique comportant au moins deux parties adjacentes constituées de matières plastiques de natures et/ou de couleurs différentes par moulage dans un moule selon l'invention. Selon le procédé, on peut :
- mettre en position d'extension au moins une paroi escamotable du moule de façon à délimiter au moins deux compartiments de moulage adjacents,
- remplir au moins un premier compartiment avec une première matière plastique, et laisser refroidir,
- par des mouvements successifs des panneaux de l'au moins une paroi escamotable, escamoter ladite paroi pour l'amener dans une position de retrait,
- remplir au moins un deuxième compartiment adjacent dudit premier compartiment avec une deuxième matière plastique, laisser refroidir et démouler la pièce.

La pièce en matière plastique de forme non plane comportant au moins deux parties adjacentes, constituées de matière plastique de nature et/ou de couleurs différentes, peut avoir une zone de jonction délimitée par deux lignes non-rectilignes, en projection dans un plan de section transversale, ne se déduisant pas l'une de l'autre par translation, et constitue par exemple un élément de parement de l'intérieur ou de l'extérieur d'un véhicule automobile.

L'invention va maintenant être décrite de façon plus précise mais non limitative en regard des figures annexées dans lesquelles :
- les figures 1A, B, C, D, sont des vues en perspective d'un moule pour moulage par injection d'une pièce en matière plastique comportant au moins deux parties adjacentes de natures et/ou de couleurs différentes, le moule comportant une paroi escamotable constituée de plusieurs panneaux mobiles ; la paroi escamotable est représentée dans différentes positions.
- les figures 2A, 2B, 2C et 2D sont des vues en coupe du moule des figures 1A, B, C et D coupé par un plan passant par la paroi mobile du moule.
- la figure 3 est une vue en perspective d'une pièce obtenue par moulage à l'aide du moule représenté aux figures 1A, B, C et D.

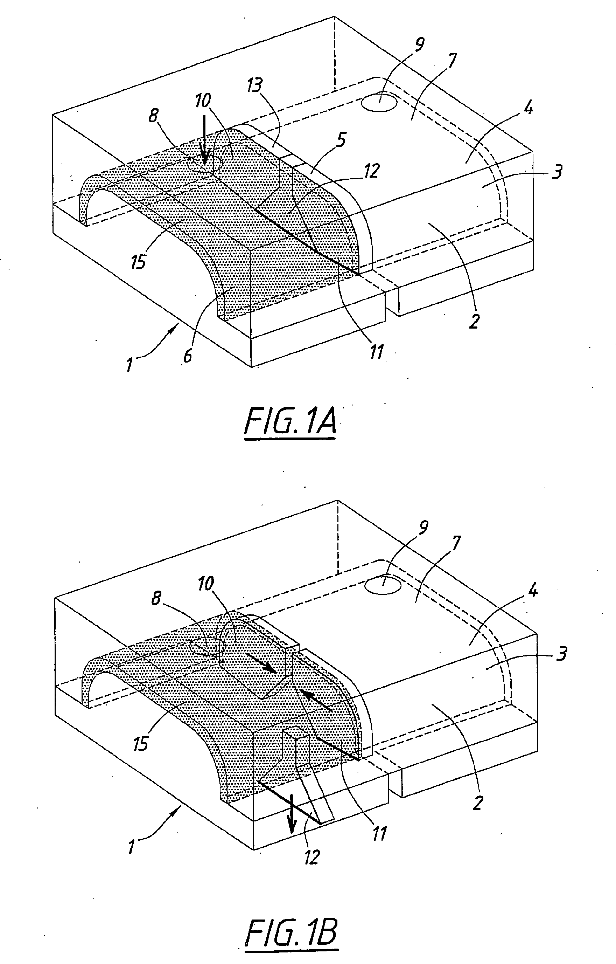

Le moule repéré généralement par 1 à la figure 1A, comporte une cavité de moulage 2 délimitée par une paroi non plane inférieure 3 et une paroi non plane supérieure 4 généralement parallèles entre elles.

La cavité de moulage 2 est divisée par une paroi escamotable 5 en un premier compartiment de moulage 6, et un deuxième compartiment de moulage 7, alimentés chacun par un trou de coulée 8 pour le compartiment 6, et 9 pour le compartiment de moulage 7.

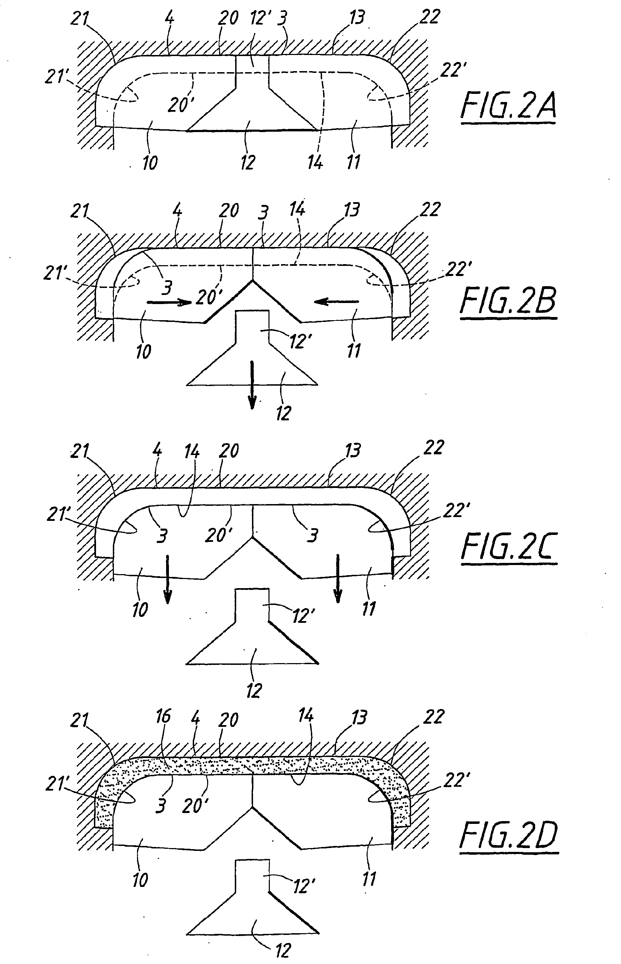

La paroi escamotable 5, en position d'extension comme représenté à la figure 1A ou à la figure 2A, est constituée de trois panneaux adjacents : deux panneaux d'extrémité 10 et 11, séparés par un panneau central 12. Les trois panneaux 10, 11 et 12 adjacents l'un à l'autre définissent une arête supérieure 13, qui vient en contact avec la paroi supérieure 4 du moule. Dans cette disposition, les deux compartiments de moulage 6 et 7 sont complètement séparés. On peut alors injecter une matière plastique par l'intermédiaire d'un premier trou de coulée 8 par exemple, comme indiqué par la flèche représentée à la figure 1A, pour former une première partie 15 d'une pièce en matière plastique.

Comme représenté à la figure 1B ou à la figure 2B, le panneau central 12 de la paroi escamotable 5, peut être déplacé vers le bas comme l'indique la flèche verticale, ce qui libère un espace entre les panneaux latéraux 10 et 11 et permet de les déplacer latéralement selon les deux flèches horizontales représentées à la figure 1B ou 2B pour les rapprocher l'un de l'autre.

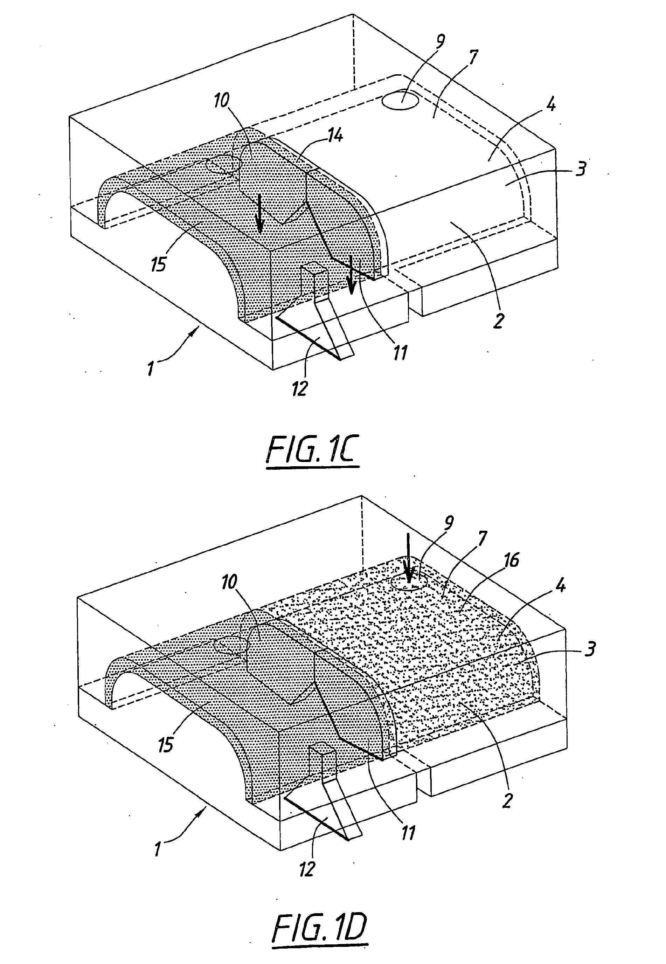

Le panneau mobile central 12 a une partie supérieure 12' dont la largeur est égale à deux fois l'épaisseur de la cavité de moulage 2 dans ses parties d'extrémité latérale, si bien que, une fois le panneau central 12 rétracté et les panneaux latéraux 10 et 11 rapprochés pour être mis au contact l'un de l'autre dans la partie centrale, l'ensemble des panneaux 10 et 11 peut être déplacé verticalement comme représenté aux figures 1C et 2C, par un mouvement selon les deux flèches verticales. A la suite de ce mouvement et comme représenté aux figures 1D ou 2D, les panneaux latéraux 10 et 11 forment alors une paroi escamotée dont l'arête supérieure 14 épouse exactement la forme de la paroi non plane inférieure 3 de la cavité de moulage 2. Dans cette disposition qui correspond à la position de retrait pour la paroi escamotable 5, l'arête supérieure 14 de la paroi escamotable en position de retrait vient compléter la paroi inférieure non plane 3 du moule.

Lorsque la paroi escamotable est escamotée, le deuxième compartiment de moulage 7 est délimité par les deux parois non planes 3 et 4 du moule, l'arête supérieure 14 de la paroi escamotable en position de retrait, et par la première partie 15 de la pièce qui est contenue dans le premier compartiment 6 dans lequel de la matière plastique a déjà été injectée. On peut alors injecter par le deuxième trou de coulée 9 une deuxième matière plastique de couleur ou de nature différente de la première matière plastique afin de constituer la deuxième partie de la pièce en matière plastique comportant deux parties de couleurs ou de natures différentes. Cette deuxième partie 16, vient se souder sur la première partie 15 de la pièce.

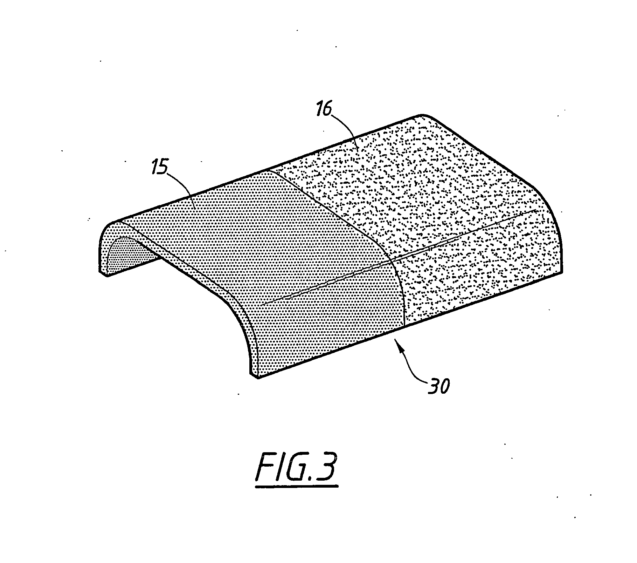

Pour fabriquer une pièce en matière plastique 30 comportant deux parties de natures ou de couleurs différentes ayant des surfaces non planes telles que représentées à la figure 3, on commence par séparer la cavité de moulage 2 en deux compartiments de moulage 6 et 7 en positionnant la paroi escamotable 5 en position d'extension. Dans cette position d'extension, la paroi escamotable 5 est constituée de trois panneaux adjacents, et son arête supérieure 13 vient en contact avec la paroi non plane supérieure 4 de la cavité de moulage 2. On injecte alors une première matière plastique par le premier trou de coulée 8 dans le premier compartiment 6, puis on laisse refroidir ou solidifier la matière plastique qui a été injectée pour constituer la première partie 15 de la pièce en matière plastique. On escamote alors la paroi 5 en l'amenant dans une position de retrait dans laquelle son arête supérieure 14 vient compléter la paroi non plane inférieure 3 de la cavité de moulage 2. Pour cela on modifie la forme de l'arête supérieure de la paroi escamotable en commençant par escamoter le panneau central 12, ce qui permet alors de rapprocher les deux panneaux latéraux 10 et 11 par un premier mouvement horizontal puis en déplaçant ces deux panneaux vers le bas par un deuxième mouvement vertical. Par ces opérations, on obtient une arête supérieure 14 de la paroi escamotable qui est à la fois continue et parfaitement adaptée à la paroi non plane inférieure 3 de la cavité de moulage 2. Dans cette disposition, le deuxième compartiment de moulage 7 est délimité à l'une de ces extrémités par la première partie 15 de la pièce en matière plastique. On injecte alors par le deuxième trou de coulée 9 une deuxième matière plastique qui est choisie de façon à être compatible et soudable avec la matière plastique de la première partie, mais qui peut avoir des propriétés différentes parce que on y a ajouté des additifs particuliers, ou qui peut être de couleur différente, ou qui peut à la fois être de couleur différente et avoir des additifs différents. Cette matière plastique injectée dans le deuxième compartiment forme la deuxième partie 16 de la pièce en matière plastique. Une fois que cette deuxième matière plastique a été complètement injectée dans le deuxième compartiment de moulage 7, on laisse refroidir l'ensemble, puis on démoule la pièce et on obtient ainsi une pièce comportant deux parties adjacentes en matière plastique ayant des couleurs et/ou des natures différentes.

Avantageusement, le refroidissement ou la solidification de la première matière plastique injectée est partielle, de telle manière que la première matière reste suffisamment ductile à coeur pour que, lors de l'injection de la deuxième matière, il se produit une interpénétration plus ou moins importante des deux matières.

Selon un niveau de refroidissement croissant, on obtient une soudure, c'est-à-dire une interpénétration des deux matières ou un collage, c'est-à-dire une adhésion de surface entre les deux matières par fusion superficielle.

Un autre paramètre déterminant la réalisation d'une soudure ou d'un collage, résulte des matériaux utilisés et de leur ductilité aux températures considérées. A titre d'exemple, le PP est plus fluide que l'ABS et à température équivalente, le PP forme une soudure alors que l'ABS forme un collage.

On notera que les parois 3 ou 4 des premier et deuxième compartiments de moulage peuvent avoir par exemple des aspects de surface différent de façon à donner des aspects de poli ou de grainage différents pour les deux parties de la pièce en matière plastique.

On notera également que l'arête supérieure 13 de la paroi escamotable 5, lorsque cette paroi est en position d'extension, comporte trois portions non colinéaires qui sont d'une part un segment central 20, et d'autre part deux arcs terminaux latéraux 21 et 22, qui s'étendent dans des directions perpendiculaires au segment central 20. De même, l'arête inférieure 14 de la paroi escamotable 5, lorsqu'elle est en position de retrait, comporte trois portions non colinéaires, qui sont d'une part un segment central 20', et d'autre part deux arcs terminaux latéraux 21' et 22' qui sont non colinéaires avec le segment central 20'. On notera en particulier que les segments 20 et 20' sont parallèles l'un à l'autre, mais que le segment 20' est plus court que le segment 20, et que les arcs terminaux 21' et 22' peuvent se déduire des arcs terminaux 21 et 22 par des translations. C'est du fait de ces dispositions que la cavité de moulage 2 peut être parfaitement séparée par une paroi escamotable 5 à géométrie variable telle qu'elle vient d'être décrite.

Le moule qui vient d'être décrit comporte deux compartiments de moulage adjacent permettant de réaliser une pièce comportant deux parties adjacentes de natures et/ou de couleurs différentes. Mais il est évident que l'on peut envisager un moule comportant plus de deux compartiments de moulage adjacent séparés deux à deux par des parois escamotables. On peut ainsi réaliser des pièces en matière plastique comportant plus de deux parties adjacentes de natures et/ou de couleurs différentes, et par exemple trois parties adjacentes ou quatre parties ou même plus.

De même la forme de la pièce 30 telle qu'elle est représentée à la figure 3 est une pièce comportant une paroi constituée d'un panneau plan terminé par des bordures latérales arrondies s'étendant perpendiculairement à la ligne de liaison entre les deux parties de natures ou de couleurs différentes. Mais, il est possible de réaliser des pièces ayant des formes différentes et comportant par exemple plusieurs panneaux-plan adjacents orientés chacun dans une direction particulière. Une telle pièce comportant plusieurs panneaux plans mais qui ne sont pas parallèles les uns aux autres, est une pièce non plane qui pour être moulée dans un moule constitué d'une cavité de moulage pouvant être séparée en plusieurs compartiments par au moins une paroi escamotable nécessite également des parois escamotables constituées de plusieurs panneaux mobiles les uns par rapport aux autres pouvant être déplacés de façon à former des parois ayant une première forme dans une position d'extension et une forme différente dans une position de retrait. L'homme du métier saura au cas par cas définir les parois escamotables constituées de panneaux adaptés pour pouvoir assurer cette évolution de géométrie nécessaire entre les positions d'extension et les positions de retrait.

Le procédé qui vient d'être décrit peut être utilisé pour fabriquer une grande variété de pièces en matière plastique comportant plusieurs parties adjacentes constituées de matières plastiques compatibles et assemblées entre elles par soudage ou par collage, mais de natures et/ou de couleurs différentes. Ces pièces sont par exemple des pièces de tableaux de bord d'automobiles, ou des pièces de parement intérieur de portière d'automobiles, ou tout autre pièce en matière plastique d'intérieure ou d'extérieure d'automobiles.

Le procédé et le moule qui viennent d'être décrits sont plus particulièrement intéressants pour fabriquer des pièces comportant au moins deux parties de natures ou de couleurs différentes ayant des surfaces non-planes et dans lesquelles, en outre, ces deux parties ont une zone de jonction délimitée par des lignes sur les parois supérieure et inférieure de la pièce, non-rectilignes, en projection orthogonale sur un plan de section transversale (plan de la Figure 3), et ne pouvant pas se déduire l'une de l'autre par une translation parallèle au plan de déplacement des panneaux jointifs de la paroi escamotable du moule. En particulier, une telle ligne de jonction non-rectiligne pourra être, en projection, au moins partiellement courbe ou en ligne brisée.

Le plan de section transversale est un plan s'étendant selon l'épaisseur de la pièce, contenant au moins partiellement la surface de jonction.

Une telle pièce à zone de jonction non-rectiligne a été représentée sur la Figure 3.

En projection orthogonale sur un plan perpendiculaire au plan de section transversale précité, la zone de jonction peut avoir une forme quelconque, pourvu qu'elle soit compatible avec les mouvements de la paroi escamotable. L'homme du métier sait déterminer ces conditions de compatibilité.

## Revendications

1. Moule pour moulage par injection d'une pièce en matière plastique (30) comportant au moins deux parties adjacentes (15, 16) constituées de deux matière plastiques compatibles et assemblées entre elles par soudage ou par collage, de natures et/ou de couleurs différentes, le moule (1) comprenant une cavité de moulage (2) délimitée par au moins deux parois non planes (3, 4), et au moins une paroi escamotable (5) mobile entre une position d'extension et une position de retrait permettant de diviser la cavité de moulage (2) en au moins deux compartiments (6, 7) pouvant être alimentés séparément en matière plastique, **caractérisé en ce que**, en position d'extension la paroi escamotable (5) a une arête non rectiligne (13) coopérant sans jeu avec une paroi (4) de la cavité de moulage, et **en ce que** la paroi escamotable comprend une pluralité de panneaux jointifs (10, 11, 12) dans au moins la position d'extension ou la position de retrait, lesdits panneaux (10, 11, 12) étant mobiles les uns par rapport aux autres de façon à pouvoir modifier la forme de l'arête non rectiligne de la paroi escamotable pour l'adapter dans la position de retrait, à la forme d'une deuxième paroi (3) de la cavité de moulage (2).

2. Moule selon la revendication 1, **caractérisé en ce que** l'arête (13) de la paroi escamotable (5) comprend au moins trois portions non colinéaires (20, 21, 22) et **en ce que** la paroi escamotable comporte au moins un panneau (10, 11) pouvant être déplacé entre la position d'extension et la position de retrait par deux mouvements successifs selon deux directions différentes.

3. Moule selon la revendication 2, **caractérisé en ce que** l'arête de la paroi (13) escamotable comporte une portion centrale (20) en forme de segment prolongée à ses deux extrémités par des arcs terminaux (21, 22) non colinéaires au segment central, et **en ce que**, en position d'extension, la paroi escamotable comporte deux panneaux latéraux (10, 11) séparés par un panneau central (12) escamotable, les panneaux latéraux (10, 11) étant mobiles selon deux directions perpendiculaires de façon à pouvoir être déplacés dans une position de retrait par deux mouvements successifs selon deux directions différentes.

4. Moule selon l'une quelconque des revendications 1 à 3, **caractérisé en ce qu'**il comporte une pluralité de parois escamotables.

5. Procédé pour fabriquer une pièce en matière plastique (30) comportant au moins deux parties adjacentes (15, 16) constituées de matières plastiques de natures et/ou de couleurs différentes par moulage dans un moule (1) selon l'une quelconque des revendications 1 à 4, **caractérisé en ce que** :
- on met en position d'extension au moins une paroi escamotable (5) du moule (1) de façon à délimiter au moins deux compartiments de moulage (6, 7) adjacents,
- on remplit au moins un premier compartiment (6) avec une première matière plastique, et on laisse refroidir,
- par des mouvements successifs des panneaux (10, 11, 12) de l'au moins une paroi escamotable (5), on escamote ladite paroi pour l'amener dans une position de retrait,
- on remplit au moins un deuxième compartiment (7) adjacent audit premier compartiment (6) avec une deuxième matière plastique et on laisse refroidir, puis on démoule la pièce.

6. Procédé selon la revendication 5, **caractérisé en ce que** on laisse refroidir partiellement la première matière plastique avant de remplir ledit au moins deuxième compartiment avec la deuxième matière plastique.

7. Procédé selon la revendication 5 ou la revendications 6, **caractérisé en ce que**, la pièce en matière plastique comporte une zone de jonction délimitée par deux lignes non-rectilignes en projection dans un plan de section transversale et ne se déduisant pas l'une de l'autre par translation, ladite pièce constituant un élément de parement de l'intérieur ou de l'extérieur d'un véhicule automobile.

## Claims

1. A mould for injection moulding a part of plastics material (30) comprising at least two adjacent parts (15, 16) comprising two compatible plastics materials assembled together by welding or adhesive bonding, of different kinds and/or colours, the mould (1) comprising a mould cavity (2) bounded by at least two non-planar walls (3, 4) and at least one retractable wall (5) which can move between an extended position and a retracted position enabling to divide mould cavity (2) into at least two compartments (6, 7) which can be separately fed with plastics material, **characterised in that** in the extended position the retractable wall (5) has a non-rectilinear edge (13) acting together with a wall (4) of the mould cavity without any play, and **in that** the retractable wall comprises a plurality of panels (10, 11, 12) which are contiguous in at least the extended position or the retracted position, said panels (10, 11, 12) being able to move in relation to each other in such a way as to modify the shape of the non-rectilinear edge of the retractable wall to adjust it to the shape of a second wail (3) of the mould cavity (2) when in the retracted position.

2. A mould according to claim 1, **characterised in that** the edge (13) of the retractable wall (5) comprises at least three non-co-linear portions (20, 21, 22) and **in that** the retractable wall comprises at least one panel (10, 11) which can be moved between the extended position and the retracted position by two successive movements in two different directions.

3. A mould according to claim 2, **characterised in that** the edge of the retractable wall (13) comprises a central portion (20) in the form of a segment which is prolonged at its two extremities by terminal arcs (21, 22) which are not co-linear with the central segment, and **in that** in the extended position the retractable wall comprises two lateral panels (30, 11) separated by a retractable central panel (12), the lateral panels (10, 11) being capable of moving in two perpendicular directions so as to be moved into a retracted position by two successive movements in two different directions.

4. A mould according to any one of claims 1 to 3, **characterised in that** it comprises a plurality of retractable walls

5. A process for manufacturing a part of plastics material (30) comprising at least two adjacent parts (15, 16) comprising plastics material of different kinds and/or colours by moulding in a mould (1) according to any one of claims 1 to 4, **characterised in that**
- at least one retractable wall (5) of the mould (1) is placed in the extended position in such a way as to bound at least two adjacent mould compartments (6, 7),
- at least one first compartment (6) is filled with a first plastics material, and allowed to cool,
- as a result of successive movements of the panels (10, 11, 12) of at least one retractable wall (5) the said wall is retracted in order to move it into a retracted position,
- at least one second compartment (7) adjacent to the first compartment (6) is filled with a second plastics material and allowed to cool, and then the part is turned out.

6. A process according to claim 5, **characterised in that** the first plastics material is allowed to cool partly before the said at least second compartment is filled with the second plastics material.

7. A process according to claim 5 or claim 6, **characterized in that**, the part of plastics material comprises a junction zone bounded by two non-rectilinear lines projecting in a transversal cross-sectional plane and which are not derived from each other by translational movement, said part forming a trim element of the interior or the exterior of a motor vehicle.

## Patentansprüche

1. Form zum Spritzgießen eines Kunststoffstücks (30), das mindestens zwei aus zwei kompatiblen Kunststoffen verschiedener Art und/oder Farbe gebildete und durch Schweißen oder durch Kleben zusammengesetzte benachbarte Teile (15, 16) aufweist, wobei die Form (1) aufweist: einen Formhohlraum (2), der durch mindestens zwei nicht ebene Wände (3, 4) begrenzt ist, und mindestens eine zwischen einer Ausstreckposition und einer Einziehposition bewegbare einziehbare Wand (5), die ein Teilen des Formhohlraums (2) in mindestens zwei Kammern (6, 7) ermöglicht, denen Kunststoff getrennt zugeführt werden kann, **dadurch gekennzeichnet, dass** die einziehbare Wand (5) in der Ausstreckposition einen nicht geradlinigen Rand (13) aufweist, der ohne Spiel mit einer Wand (4) des Formhohlraumes zusammenwirkt, und dass die einziehbare Wand in mindestens der Ausstreckposition oder der Einziehposition eine Mehrzahl von aneinandergrenzenden Platten (10, 11, 12) aufweist, wobei die Platten (10, 11, 12) bezüglich einander bewegbar sind, um die Form des nicht geradlinigen Randes der einziehbaren Wand verändern zu können, um diese in der Einziehposition an die Form einer zweiten Wand (3) des Formhohlraumes (2) ar-passen zu können.

2. Form gemäß Anspruch 1, dadurch gekenntzeichnet, dass der Rand (13) der einziehbaren Wand (5) mindestens drei nicht kollineare Abschnitte (20, 21, 22) aufweist und die einziehbare Wand mindestens eine Platte (10, 11) aufweiset, die durch zwei aufeinanderfolgende Bewegungen entlang zwei unterschiedlichen Richtungen zwischen der Ausstreckposition und der Einziehposition bewegt werden kann.

3. Form gemäß Anspruch 2, **dadurch gekennzeichnet, dass** der Rand der einziehbaren Wand (13) einen zentralen segmentförmigen Abschnitt (20) aufweist, der an seine beiden Enden durch zwei zu dem zentralen Abschnitt nicht kollineare Endbögen (21, 22) verlängert ist, und dass die einziehbar Wand in der Ausstreckposition zwei seitliche Platten (10, 11) aufweist, die durch eine einziehbare zentrale Platte (12) getrennt sind, wobei die seitlichen Platten (10, 11) entlang zwei senkrechten Richtungen bewegbar sind, um in einer Einziehposition durch zwei aufeinanderfolgende Bewegungen entlang zwei unterschiedlichen Dichtungen bewegt werden zum könnten.

4. Form gemäß einem der Ansprüche 1 bis 3, dadurch gekenntzeichnet, dass sie eine Mehrzahl von einziehbaren Wänden aufweist.

5. Verfahren zum Herstellen eines Kunststoffstücks (30), das mindestens zwei benachbarte Teile (15, 16) aufweist, die aus Kunststoffen unterschiedlicher Art und/oder Farbe mittels Formens in einer Form (1) gemäß einem der Ansprüche 1 bis 4 gebildet sind, **dadurch gekennzeichnet, dass**:
- mindestens eine einziehbare Wand (5) der Form (1) in eine Ausstreckposition gebracht wird, um mindestens zwei benachbarte Formkammern (6, 7) zu begrenzen,
- mindestens eine erste Kammer (6) mit einem ersten Kunststoff gefüllt wird und ermöglicht wird, dass dieser abkühlt,
- durch aufeinanderfolgende Bewegungen der Platten (10, 11, 12) mindestens einer einziehbare Wand (5) die Wand eingezogen wird, um sie in eine Einziehposition zu bringen,
- mindestens eine zu der ersten Kammer (6) benachbarte zweite Kammer (7) mit einem zweiten Kunststoff gefüllt wird und ermöglicht wird, dass dieser abkühlt, und anschließend das Stück aus der Form gelöst wird.

6. Verfahren gemäß Anspruch 5, **dadurch gekennzeichnet, dass** das teilweise Abkühlen des ersten Kunststoffs vor dem Füllen der mindestens zweiten Kammer mit dem zweiten Kunststoff ermöglicht wird.

7. Verfahren gemäß Anspruch 5 oder Anspruch 6, **dadurch gekennzeichnet, dass** das Kunststöffstück einen Verbindungsbereich auf weist, der von zwei Linien begrenzt wird, die in Projektion in einer Querschnittsebene nicht geradlinig sind und nicht durch Translation voneinander ableitbar sind, wobei das Stück ein Verkleidungselement für das Innere oder äußerte eines Kraftfahrzeugs bildet.
